# EUROPEAN PATENT SPECIFICATION

(11) **EP 1 790 511 B1**
(45) Date of publication and mention of the grant of the patent: **05.08.2009**
(21) Application number: 06123759.0
(22) Date of filing: 09.11.2006
(51) Int. Cl.: B60H 1/32, B60H 1/00

(54) **An assembly for ventilating and air-conditioning of a driving compartment of a motor vehicle**
Anordnung zur Belüftung und Klimatisierung einer Fahrerkabine eines Kraftfahrzeugs
Ensemble pour la ventilation et la climatisation d'une cabine de conduite d'un véhicule automobile

(30) Priority: 28.11.2005 SE 0502588
(43) Date of publication of application: 30.05.2007
(73) Proprietor: Scania CV AB (publ), 151 87 Södertälje (SE)
(72) Inventor: Pettersson, Emil, 117 31 Stockholm (SE); Hall, Ola, 155 31 Nykvarn (SE)

(56) References cited:
- DE-A1- 19 637 408
- FR-A- 2 624 809
- US-A- 4 956 979
- US-A- 5 481 886
- US-B1- 6 422 301

## Description

An assembly for ventilating and air-conditioning of a driving compartment of a motor vehicle

TECHNICAL FIELD OF THE INVENTION AND PRIOR ART

The present invention relates to an assembly for ventilating and air-conditioning of a driving compartment of a motor vehicle, said assembly comprising a casing having at least one intake port for air and at least one exhaust port opening into said compartment for air entering the casing through said intake port, evaporator means arranged in said casing for cooling air passing from said intake port to said exhaust port, said evaporator means generating liquid in the form of condensate as the air is cooled, a fan member having a low pressure side thereof connected to said intake port and a high pressure side thereof connected to said exhaust port for drawing air into the casing through said intake port and blow it to said evaporator means and further through said exhaust port out into said compartment, and a draining arrangement for removing liquid from the casing emanating from said cooling of air by the evaporator means or liquid contained in the air entering the casing through said intake port.

The motor vehicle may be of any type having an assembly of this type, such as a car, a bus, a lorry etc.

An assembly of this type is used for ensuring that the conditions in the driving compartment of the motor vehicle is experienced as pleasant by the driver and possible passengers present in said compartment of the motor vehicle. Such an assembly is for that sake mostly a so called heating, ventilating and air-conditioning assembly, i.e. it is then also provided with heating means arranged on the high pressure side of the fan member for optionally heating air before blowing it out into the driving compartment through the exhaust port. However, the invention also covers such assemblies having no such heating means.

In operation of an assembly of this type liquid in the form of condensate is formed when the evaporator means is cooling air and liquid and humidity may also enter the casing through said intake port and be transported with air to the high pressure side of the casing. The liquid so produced on the high pressure side of the fan member has to be removed from the casing, and that is the reason for providing an assembly of this type with said draining arrangement.

Assemblies of this type are already known through for example US 5 481 886 and US 6 422 301 B1. A disadvantage of such assemblies already known is that an additional amount of air not needed for the ventilating and air-conditioning function has to be drawn into said casing for transporting said liquid out of the casing and/or air is blown out from the casing through an outlet opening in the casing arranged for getting rid of the liquid, so that air is then also blown out through said outlet opening independently of any need of removing liquid from the casing. This means that the fan member has to be overdimensioned or an additional fan member has to be arranged with respect to the case in which no additional air was needed for transporting the liquid out of the casing or air is lost by blowing it out of the casing together with the liquid. Another disadvantage is that air may also enter the casing through liquid outlet openings without passing any filter means, which is mostly required for the air to be blown out into the driving compartment, so that there is a risk of admixing such unwanted air to the air of the driving compartment.

SUMMARY OF THE INVENTION

The object of the present invention is to provide an assembly of the type defined in the introduction being improved with respect to such assemblies already known.

This object is according to the invention obtained by providing such an assembly in which the draining arrangement comprises at least one channel starting on the high pressure side of the casing in a region below said evaporator means and extending to the low pressure side thereof for conducting said liquid from the high pressure side of the casing to the low pressure side thereof, said channel being arranged to conduct said liquid to an outlet formed by an opening in the bottom of the casing on said low pressure side, and means adapted to collect said liquid arriving from said channel to the outlet opening substantially as a column above said outlet opening by means of the negative air pressure prevailing thereabove.

The design of said collecting means at the outlet opening of the casing and the arrangement thereof on the low pressure side thereof enables draining of liquid from the casing without any risk whatsoever of loosing air by blowing it out through any outlet opening for the liquid or having any flooding of liquid inside the casing. Thus, the outlet opening will always be closed by said liquid column thanks to the negative air pressure prevailing thereabove, so that the liquid of this column will prevent air from escaping through said opening. Moreover, the outlet opening will be in the open state, so that there is no risk of liquid flooding to other parts of the casing.

According to an embodiment of the invention the draining arrangement comprises at least one said channel being of a first type in the form of a slot opening upwards for collecting liquid from a region of the casing upstream of said evaporator means with respect to the direction of the air from the intake port to the exhaust port for transport of said liquid therein to the low pressure side of the casing through the difference in air pressure of said high and low pressure sides. Such a so called recirculation channel makes it possible to use said air pressure difference established by the fan member for drawing the liquid arriving to the high pressure side through said channel back to the low pressure side for being drained. This drainage may then take place on the same location as the drainage of rain water entering the low pressure side of the casing.

According to another embodiment of the invention said draining arrangement comprises a plurality of said first channels arranged side by side in the bottom of the casing and joining each other on the low pressure side of the casing for delivering the liquid to said collecting means. This constitutes a suitable way of transporting liquid from the entire relevant region of the casing to said collecting means for being drained.

According to another embodiment of the invention said draining arrangement comprises at least one channel being of a second type extending in the bottom of said casing and starting in a region of said evaporator means or downstream thereof with respect to the direction of the air from the intake port to the exhaust port of the casing, said second channel has at least in a portion where it starts a pipe-like character with surrounding walls and is arranged to conduct liquid condensate formed by the evaporator means and liquid contained in the air entering the casing through said intake port and which has passed the evaporator means by means of gravitation from this region of the casing towards the low pressure side thereof. Liquid turning up in this part of the casing may efficiently be transported towards the low pressure side of the casing through the gravitation by a channel having this pipe-like character. In the part of the casing where this second channel starts it may be difficult to rely on said air pressure difference mentioned above for the start of the transport towards said collecting means on the low pressure side of the casing.

According to another embodiment of the invention said second channel has a pipe-like character with surrounding walls over the entire extension thereof to the low pressure side of the casing for transport of said liquid by means of gravitation, which results in a reliable transportation of this liquid to the outlet opening for drainage.

According to another embodiment of the invention the assembly comprises a plurality of said second channels arranged side by side and in the bottom of the casing and joining each other on the low pressure side of the casing for delivering the liquid to said collecting means.

According to another embodiment of the invention said first and second channels are arranged to join each other on the low pressure side of said casing for delivering liquid to a said collecting means in common, which simplifies the construction of the draining arrangement.

According to another embodiment of the invention said second channels are arranged inside ridges separating adjacent valleys each forming a said first channel in a bottom portion of said casing. Said first and second channels may advantageously be combined in this way.

According to another embodiment of the invention said draining arrangement has a plurality of said outlet openings with associated collecting means and valve members. Selecting an appropriate number of such collecting means and valve members may result in a simple construction of the draining arrangement and reliable function thereof.

According to another embodiment of the invention the assembly comprises a spring member adapted to press a valve member into a position of closing said outlet opening while releasing potential energy. This spring member is then preferably a compression spring, but it is within the scope of the invention to obtain the biasing of the valve member into the closing position through a spring member in the form of a gas spring or a hydraulic potential energy releasing and storing member.

According to another embodiment of the invention said casing also contains heating means arranged downstream of the evaporator means with respect to the direction of the air through the casing from said intake port to said exhaust port and adapted to heat air before it is blown out into said compartment through said exhaust port. It is favourable in most countries to include such heating means in an assembly of this type.

Further advantages as well as advantageous features of the invention will appear from the following description.

BRIEF DESCRIPTION OF THE DRAWINGS

With reference to the appended drawings, below follows a specific description of an embodiment of the invention cited as an example.

In the drawings:
Fig 1 is schematic partially sectioned view of the front part of a driving compartment of a lorry very schematically illustrating the general construction of an assembly for heating, ventilating and air-conditioning according to the present invention,
Fig 2 is a simplified perspective view of an arrangement according to said embodiment of the invention,
Fig 3 is a perspective view of a part of the assembly shown in Fig 2, and
Fig 4 is a perspective view of another part of the assembly according to Fig 2.

DETAILED DESCRIPTION OF AN EMBODIMENT OF THE INVENTION

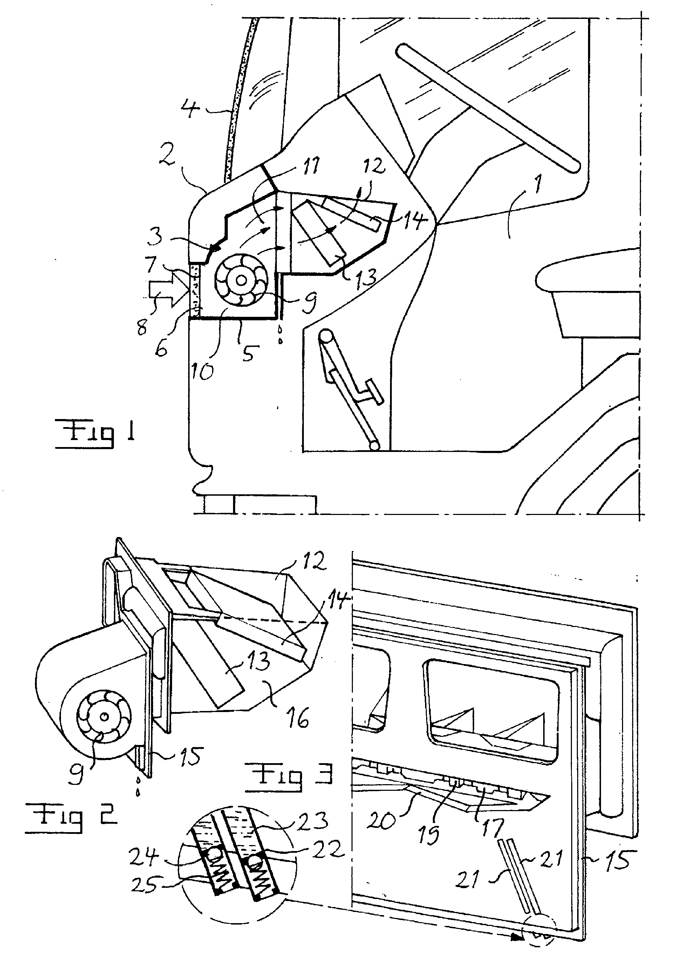

Fig 1 schematically illustrates the front part of a driving compartment 1 of a motor vehicle in the form of a lorry 2 having an assembly 3 for heating, ventilating and air-conditioning of the driving compartment arranged in the region below the windshield 4 of the vehicle.

The assembly comprises a casing 5 with an intake port 6 directed substantially in the driving direction of the vehicle and covered by a filter member 7 for entering of a flow of outside air as illustrated through the arrow 8 created when driving the vehicle forwards with a sufficient speed.

The casing also contains a fan member 9 having a low pressure side 10 thereof connected to said intake port 6 and a high pressure side 11 thereof connected to an exhaust port 12 opening into the driving compartment in the region inside the windshield 4. The casing may also have a second intake port not shown for air recirculated from the driving compartment into the casing at the low pressure side 10 thereof. Thus, the fan member will when running draw air from the intake port 6, and also said second intake port when there, and blow the air out into the driving compartment 1 through the exhaust port 12.

It is schematically indicated how the casing also contains an evaporator means 13 and heating means 14, arranged at the high pressure side 11 of the fan member 9 for cooling air and heating air, respectively, before it is blown out into the driving compartment. How the operation of the evaporating means, heating means and fan member are co-ordinated for obtaining a desired temperature of the air inside the driving compartment is known within the art and will not be further explained here.

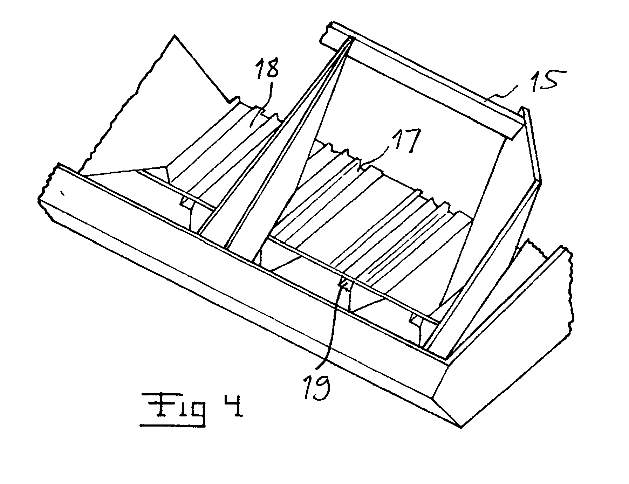

Reference is now also made to Figs 2-4. The part of the assembly arranged to the left of the frame 15 shown in Fig 2 is arranged outside the driving compartment of the vehicle, whereas the part of the assembly to the right thereto, i.e. the part of the casing containing the evaporator means 13, the heating means 14 and the exhaust port 12, is arranged in the driving compartment of the vehicle. Liquid may occur in the part 16 of the casing located inside the driving compartment by being present in the air entering the casing through the intake port 6 or by being generated in the form of condensate as the air is cooled when passing the evaporator means 13. This part 16 of the casing 5 has a bottom provided with a plurality of slot-like channels 17 of a first type arranged side by side and extending from the region of the evaporator means 13 and to the low pressure side of the casing to the frame 15 as shown in Fig 3. The bottom 18 of the casing is in this part 16 of the casing also provided with a plurality of second channels 19 having a pipe-like character with surrounding walls extending from the region of the evaporator means 13 and to the low pressure side of the casing as shown in Fig 3.

Liquid contained in the air entering the casing through the intake port and occuring on the bottom of the casing upstream of the evaporator means with respect to the direction of the air through the casing from the intake port to the exhaust port will be drawn in said first channels 17 through the pressure difference between the high pressure side and the low pressure side of the casing to the low pressure side thereof and be collected there by a collecting channel 20 in common. Liquid occurring further downstream in the casing or being generated in the form of a condensate as the air is cooled by the evaporator means will enter the second channels 19 and be transported by means of gravitation to the low pressure side of the casing and be collected in the collecting channel 20 in common with the first channels 17. The second channels 19 are in fact arranged inside ridges separating adjacent valleys each forming a first channel 17 in a bottom portion of the casing. Accordingly, the second channels 19 begin further downstream with respect to the direction of the air flow through the casing than the first channels 17.

The draining assembly further comprises a number of channel-like connecting means 21 connected to the collecting channel 20 for receiving liquid from said first and second channels. These collecting means are adapted to collect the liquid arriving from these channels to an outlet opening 22 for draining liquid from the casing substantially as a column 23 above a valve member 24 having the character of a non-return valve and being biased into a position of closing said outlet opening 23 by a spring member 25. The spring member 25 is so designed that the valve member will open the outlet opening 22 as of a liquid column of a predetermined height thereabove for draining liquid from the casing. Thus, the liquid column in said collecting means 21 will never exceed said predetermined height, and it will automatically be closed should the liquid column not reach said predetermined height. However, thanks to the negative pressure prevailing above the outlet openings no valve member is in fact needed, but this air pressure will create a said column above the opening acting as a non-return valve and closing the opening against air entering the casing through this opening.

Accordingly, liquid occurring on the high pressure side of the fan member as a consequence of the operation of the evaporator means or by being contained in the air drawn into the casing through the intake port will efficiently be drained through said first and second channels and the collecting means 21 without any need of additional air for the transport of the liquid or any risk of escape of air from the casing through the liquid outlet openings or risk of air entering the casing through these openings.

The invention is of course not in any way restricted to the embodiment described above, but many possibilities to modifications thereof will be apparent to a person with ordinary skill in the art without departing from the basic idea of the invention as defined in the appended claims.

"Joining each other" with respect to the channels as used in the claims does not mean that all the channels have to be joined to each other, but they may be joined in groups of channels.

Although it is stated in the claims that said first channel is adapted to collect liquid from a region of the casing upstream of the evaporator means this channel may also collect liquid on other places, such as at the evaporator means.

## Claims

1. An assembly for ventilating and air-conditioning of a driving compartment (1) of a motor vehicle (2), said assembly comprising:
- a casing (5) having at least one intake port (6) for air and at least one exhaust port (12) opening into said compartment for air entering the casing through said intake port,
- evaporator means (13) arranged in said casing for cooling air passing from said intake port to said exhaust port, said evaporator means generating liquid in the form of condensate as the air is cooled,
- a fan member (9) having a low pressure side (10) thereof connected to said intake port and a high pressure side (11) thereof connected to said exhaust port for drawing air into the casing through said intake port and blow it to said evaporator means and further through said exhaust port out into said compartment, and
- a draining arrangement for removing liquid from the casing (5) emanating from said cooling of air by the evaporator means or liquid contained in the air entering the casing through said intake port,
**characterized in that** said draining arrangement comprises at least one channel (17, 19) starting on the high pressure side (11) of the casing (5) in a region below said evaporator means (13) and extending to the low pressure side (10) thereof for conducting said liquid from the high pressure side of the casing to the low pressure side thereof, said channel being arranged to conduct said liquid to an outlet formed by an opening (22) in the bottom of the casing on said low pressure side and means (21) adapted to collect said liquid arriving from said channel to the outlet opening substantially as a column (23) above said outlet opening by means of the negative air pressure prevailing thereabove.

2. An assembly according to claim 1, **characterized in that** the draining arrangement comprises at least one said channel (17) being of a first type in the form of a slot opening upwards for collecting liquid from a region of the casing upstream of said evaporator means (13) with respect to the direction of the air from the intake port (6) to the exhaust port (12) for transport of said liquid therein to the low pressure side (10) of the casing through the difference in air pressure of said high and low pressure sides.

3. An assembly according to claim 2, **characterized in that** said draining arrangement comprises a plurality of said first channels (17) arranged side by side in the bottom (18) of the casing and joining each other on the low pressure side (10) of the casing for delivering the liquid to said collecting means.

4. An assembly according to any of the preceding claims, **characterized in that** said draining arrangement comprises at least one said channel (19) being of a second type extending in the bottom (18) of said casing and starting in a region of said evaporator means (13) or downstream thereof with respect to the direction of the air from the intake port to the exhaust port of the casing, that said second channel has at least in a portion where it starts a pipe-like character with surrounding walls and is arranged to conduct liquid condensate formed by the evaporator means and liquid contained in the air entering the casing through said intake port and which has passed the evaporator means by means of gravitation from this region of the casing towards the low pressure side thereof.

5. An assembly according to claim 4, **characterized in that** said second channel (19) has a pipe-like character with surrounding walls over the entire extension thereof to the low pressure side (10) of the casing (5) for transport of said liquid by means of gravitation.

6. An assembly according to claim 4 or 5, **characterized in that** it comprises a plurality of said second channels (19) arranged side by side and in the bottom (18) of the casing and joining each other on the low pressure side (10) of the casing for delivering the liquid to said collecting means (21).

7. An assembly according to claims 2 and 4, **characterized in that** said first (17) and second (19) channels are arranged to join each other on the low pressure side (10) of said casing for delivering liquid to a said collecting means (21) in common.

8. An assembly according to claims 3 and 6, **characterized in that** said second channels (19) are arranged inside ridges separating adjacent valleys each forming a said first channel (17) in a bottom portion of said casing.

9. An assembly according to any of the preceding claims, **characterized in that** said draining arrangement has a plurality of said outlet openings (22) with associated collecting means (21) and valve members (24).

10. An assembly according to any of the preceding claims, **characterized in that** it comprises a spring member (25) adapted to press a valve member (24) into a position of closing said outlet opening while releasing potential energy.

11. An assembly according to any of the preceding claims, **characterized in that** said casing (5) also contains heating means (14) arranged downstream of the evaporator means (13) with respect to the direction of the air through the casing from said intake port to said exhaust port and adapted to heat air before it is blown out into said compartment (1) through said exhaust port (12).

## Patentansprüche

1. Anordnung zum Belüften und Klimatisieren einer Fahrerkabine (1) eines Kraftfahrzeugs (2), wobei die Anordnung aufweist:
- ein Gehäuse (5) mit wenigstens einer Einlassöffnung (6) für Luft und wenigstens einer Auslassöffnung (12), die sich in die Kabine hinein öffnet, damit Luft durch die Einlassöffnung in das Gehäuse gelangt,
- Verdampfermittel (13), die in dem Gehäuse angeordnet sind, um Luft, die von der Einlassöffnung zu der Auslassöffnung strömt, zu kühlen, wobei die Verdampfermittel eine Flüssigkeit in der Form eines Kondensats erzeugen, wenn die Luft gekühlt wird,
- ein Lüfterelement (9), das eine Niederdruckseite (10) aufweist, die mit der Einlassöffnung verbunden ist, und eine Hochdruckseite (11) aufweist, die mit der Auslassöffnung verbunden ist, um Luft durch die Einlassöffnung in das Gehäuse zu saugen und sie zu den Verdampfermitteln und weiter durch die Auslassöffnung in die Kabine zu blasen, und
- eine Abflussanordnung zum Entfernen der Flüssigkeit aus dem Gehäuse (5), die von dem Kühlen der Luft durch die Verdampfermittel oder aus Flüssigkeit stammt, die in der Luft enthalten ist, welche durch die Einlassöffnung in das Gehäuse gelangt,
**dadurch gekennzeichnet, dass** die Abflussanordnung wenigstens einen Durchgang (17, 19) aufweist, der von der Hochdruckseite (11) des Gehäuses (5) in einem Bereich unterhalb der Verdampfermittel (13) ausgeht und sich zu der Niederdruckseite (10) hiervon erstreckt, um die Flüssigkeit von der Hochdruckseite des Gehäuses zu dessen Niederdruckseite abzuführen, wobei der Durchgang dazu angeordnet ist, die Flüssigkeit zu einem Auslass abzuführen, der durch eine Öffnung (22) in dem Boden des Gehäuses auf der Niederdruckseite gebildet ist und durch Mittel (21), die dazu ausgebildet sind, die Flüssigkeit aufzufangen, die ausgehend von dem Durchgang im Wesentlichen als Säule (23) oberhalb der Abflussöffnung mittels eines über dieser herrschenden Luftunterdrucks, zu der Abflussöffnung gelangt.

2. Anordnung nach Anspruch 1, **dadurch gekennzeichnet, dass** die Abflussanordnung wenigstens einen Durchgang (17) einer ersten Art in der Form eines Schlitzes aufweist, der sich zum Auffangen von Flüssigkeit ausgehend von einem Bereich des Gehäuses, der den Verdampfermitteln (13) bezüglich der Richtung der Luft von der Einlassöffnung (6) zu der Auslassöffnung (12) vorgelagert ist, nach oben öffnet, um die darin enthaltene Flüssigkeit zu der Niederdruckseite (10) des Gehäuses durch die Luftdruckdifferenz der Hochdruck- und Niederdruckseite zu transportieren.

3. Anordnung nach Anspruch 2, **dadurch gekennzeichnet, dass** die Abflussanordnung eine Mehrzahl der ersten Durchgänge (17) aufweist, die nebeneinander in dem Boden (18) des Gehäuses angeordnet sind und sich auf der Niederdruckseite (10) des Gehäuses vereinigen, um die Flüssigkeit zu den Auffangmitteln abzuführen.

4. Anordnung nach einem der vorhergehenden Ansprüche, **dadurch gekennzeichnet, dass** die Abflussanordnung wenigstens einen Durchgang (19) einer zweiten Art aufweist, welcher sich in dem Boden (18) des Gehäuses erstreckt und in einem Bereich der Verdampfermittel (13) ausgeht oder diesem bezüglich der Richtung der Luft von der Einlassöffnung zu der Auslassöffnung des Gehäuses nachgeschaltet beginnt, dass der zweite Durchgang wenigstens in einem Bereich, in dem er beginnt, eine rohrartige Ausgestaltung mit umgebenden Wänden hat und dazu angeordnet ist, Flüssigkeitskondensat, das von den Verdampfungsmitteln gebildet wird, und Flüssigkeit abzuführen, die in der Luft enthalten ist, welche durch die Einlassöffnung in das Gehäuse eintritt und die Verdampfermittel aufgrund der Erdanziehungskraft von diesem Bereich des Gehäuses in Richtung zu dessen Unterdruckseite passiert hat.

5. Anordnung nach Anspruch 4, **dadurch gekennzeichnet, dass** der zweite Durchgang (19) eine rohrartige Ausgestaltung mit umgebenden Wänden über seine gesamte Erstreckung bis hin zu der Unterdruckseite (10) des Gehäuses (5) zum Transport der Flüssigkeit aufgrund der Erdanziehungskraft hat.

6. Anordnung nach Anspruch 4 oder 5, **dadurch gekennzeichnet, dass** sie eine Mehrzahl von zweiten Durchgängen (19) aufweist, die nebeneinander und in dem Boden (18) des Gehäuses angeordnet sind und sich auf der Unterdruckseite (10) des Gehäuses vereinigen, um die Flüssigkeit zu den Auffangmitteln (21) abzuführen.

7. Anordnung nach Anspruch 2 und 4, **dadurch gekennzeichnet, dass** die ersten (17) und zweiten (19) Durchgänge angeordnet sind, um sich auf der Unterdruckseite (10) des Gehäuses zu vereinigen, um gemeinsam Flüssigkeit zu den Auffangmitteln (21) abzuführen.

8. Anordnung nach Anspruch 3 und 6, **dadurch gekennzeichnet, dass** die zweiten Durchgänge (19) innerhalb von Rippen angeordnet sind, die benachbarte Mulden voneinander trennen, wobei jede einen ersten Durchgang (17) in einem Bodenbereich des Gehäuses bildet.

9. Anordnung nach einem der vorhergehenden Ansprüche, **dadurch gekennzeichnet, dass** die Abflussanordnung eine Mehrzahl von Abflussöffnungen (22) mit verbundenen Auffangmitteln (21) und Ventilgliedern (24) aufweist.

10. Anordnung nach einem der vorhergehenden Ansprüche, **dadurch gekennzeichnet, dass** sie ein Federglied (25) aufweist, das ausgebildet ist, um ein Ventilglied (24) in eine Stellung zu drücken, in der es die Abflussöffnung verschließt, während es potentielle Energie freigibt.

11. Anordnung nach einem der vorhergehenden Ansprüche, **dadurch gekennzeichnet, dass** das Gehäuse (5) auch Heizmittel (14) umfasst, die bezüglich der Richtung der Luft durch das Gehäuse von der Einlassöffnung zu der Auslassöffnung nachgeschaltet zu den Verdampfermittein angeordnet sind und dazu ausgebildet sind, die Luft zu erhitzen, bevor sie durch die Auslassöffnung (2) in die Kabine (1) ausgeblasen wird.

## Revendications

1. Ensemble destiné à ventiler et à climatiser une cabine de conduite (1) d'un véhicule à moteur (2), ledit ensemble comprenant :
- un boîtier (5) comprenant au moins un orifice d'admission (6) pour l'air et au moins un orifice d'évacuation (12) débouchant dans ladite cabine pour que l'air entre dans le boîtier à travers ledit orifice d'admission,
- un évaporateur (13) disposé dans ledit boîtier pour refroidir l'air passant dudit orifice d'admission audit orifice d'évacuation, ledit évaporateur générant du liquide sous la forme d'un condensat lorsque l'air est refroidi,
- un élément de ventilateur (9) dont un côté à basse pression (10) est relié audit orifice d'admission et un côté à haute pression (11) est relié audit orifice d'évacuation pour attirer l'air dans ledit boîtier à travers ledit orifice d'admission et l'expulser vers ledit évaporateur puis à travers l'orifice d'évacuation vers ladite cabine, et
- un dispositif de drainage destiné à éliminer le liquide du boîtier (5) provenant dudit refroidissement de l'air par ledit évaporateur ou du liquide contenu dans l'air entrant dans le boîtier à travers ledit orifice d'admission,
**caractérisé en ce que** ledit dispositif de drainage comprend au moins un canal (17, 19) commençant au niveau du côté à haute pression (11) du boîtier (5) dans une région située sous ledit évaporateur (13) et s'étendant vers le côté à basse pression (10) de celui-ci pour conduire ledit liquide du côté à haute pression du boîtier au côté à basse pression de celui-ci, ledit canal étant agencé pour conduire ledit liquide vers un orifice d'évacuation formé par une ouverture (22) dans le fond du boîtier du côté à basse pression et un dispositif (21) conçu pour collecter ledit liquide arrivant dudit canal à l'ouverture de l'orifice d'évacuation sensiblement sous la forme d'une colonne (23) au-dessus de ladite ouverture de l'orifice d'évacuation à l'aide de la pression de l'air négative prévalant au-dessus de celui-ci.

2. Ensemble selon la revendication 1, **caractérisé en ce que** le dispositif de drainage comprend au moins un canal (17) d'un premier type sous la forme d'une fente ouverte vers le haut pour collecter le liquide provenant d'une région du boîtier en amont dudit évaporateur (13) par rapport à la direction de l'air provenant de l'orifice d'admission (6) vers le port d'évacuation (12) pour transporter ledit liquide dans celui-ci jusqu'au côté à basse pression (10) du boîtier grâce à la différence de pression de l'air desdits côtés à haute et à basse pression.

3. Ensemble selon la revendication 2, **caractérisé en ce que** ledit dispositif de drainage comprend une pluralité desdits premiers canaux (17) agencés côte à côte au fond (18) du boîtier et se rejoignant au niveau du côté à basse pression (10) du boîtier pour livrer le liquide audit dispositif de collecte.

4. Ensemble selon l'une quelconque des revendications précédentes, **caractérisé en ce que** ledit dispositif de drainage comprend au moins un canal (19) d'un second type s'étendant dans le fond (18) dudit boîtier et commençant dans une région dudit évaporateur (13) ou en aval de celui-ci par rapport à la direction de l'air de l'orifice d'admission vers l'orifice d'évacuation du boîtier, ledit second canal comportant au moins une partie au niveau de laquelle il prend un caractère de type tuyau avec des parois enveloppantes et est agencé pour conduire le condensat de liquide formé par l'évaporateur et le liquide contenu dans l'air entrant dans le boîtier à travers ledit orifice d'admission et qui est passé au travers de l'évaporateur sous l'effet de la gravitation de cette région du boîtier au côté à basse pression de celui-ci.

5. Ensemble selon la revendication 4, **caractérisé en ce que** ledit second canal (19) a un caractère de type tuyau avec des parois enveloppantes sur toute sa longueur jusqu'au côté à basse pression (10) du boîtier (5) pour le transport dudit liquide sous l'effet de la gravitation.

6. Ensemble selon la revendication 4 ou 5, **caractérisé en ce qu'**il comprend une pluralité desdits seconds canaux (19) agencés côte à côte et dans le fond (18) du boîtier et se rejoignant au niveau du côté à basse pression (10) du boîtier pour livrer le liquide audit dispositif de collecte (21).

7. Ensemble selon les revendications 2 et 4, **caractérisé en ce que** lesdits premier (17) et second (19) canaux sont agencés pour se rejoindre au niveau du côté à basse pression (10) dudit boîtier pour livrer le liquide audit dispositif de collecte (21) en commun.

8. Ensemble selon les revendications 3 et 6, **caractérisé en ce que** lesdits seconds canaux (19) sont agencés à l'intérieur de stries séparant des sillons adjacents formant chacun un premier canal (17) dans une partie de fond dudit boîtier.

9. Ensemble selon l'une quelconque des revendications précédentes, **caractérisé en ce que** ledit agencement de drainage comporte une pluralité desdites ouvertures d'orifice d'évacuation (22) avec des moyens de collecte (21) et des éléments de valve (24) associés.

10. Ensemble selon l'une quelconque des revendications précédentes, **caractérisé en ce qu'**il comprend un élément de ressort (25) conçu pour comprimer un élément de valve (24) dans une position de fermeture de ladite ouverture de l'orifice d'évacuation tout en libérant l'énergie potentielle.

11. Ensemble selon l'une quelconque des revendications précédentes, **caractérisé en ce que** ledit boîtier (5) contient également des moyens de chauffage (14) agencés en aval de l'évaporateur (13) par rapport à la direction de l'air à travers le boîtier dudit orifice d'admission audit orifice d'évacuation et conçus pour chauffer l'air avant qu'il soit insufflé à l'extérieur dans ladite cabine (1) par ledit orifice d'évacuation (12).
